# EUROPÄISCHE PATENTSCHRIFT

(11) **EP 2 798 202 B1**
(45) Veröffentlichungstag und Bekanntmachung des Hinweises auf die Patenterteilung: **16.03.2016**
(21) Anmeldenummer: 12822966.3
(22) Anmeldetag: 28.12.2012
(51) Int. Cl.: F03D 7/02, F03D 1/06

(54) **TELESKOPIERBARES ROTORBLATT UND TELESKOPIERBARER TURM SOWIE, WINDENERGIEANLAGE UND WINDENERGIEANLAGENPARK**
TELESCOPIC ROTOR BLADE AND TELESCOPIC TOWER, WIND TURBINE, AND WIND FARM
PALE DE ROTOR ET MÂT TÉLESCOPIQUES, ÉOLIENNE ET PARC ÉOLIEN ASSOCIÉS

(30) Priorität: 29.12.2011 DE 102011122504
(43) Veröffentlichungstag der Anmeldung: 05.11.2014
(73) Patentinhaber: Rohden, Rolf, 26607 Aurich (DE)
(72) Erfinder: Rohden, Rolf, 26607 Aurich (DE)
(74) Vertreter: Weidner Stern Jeschke
(86) Internationale Anmeldenummer: PCT/DE2012/100402
(87) Internationale Veröffentlichungsnummer: WO 2013/097847

(56) Entgegenhaltungen:
- WO-A1-2008/142498
- DE-A1- 4 428 731
- DE-C- 736 454
- DE-U1-202006 011 099
- US-A1- 2003 223 868
- US-A1- 2007 243 063

## Beschreibung

Rotorblatt mit einem ersten Rotorblattabschnitt und einem zweiten Rotorblattabschnitt, wobei der erste Rotorblattabschnitt und der zweite Rotorblattabschnitt mittels einer Stelleinrichtung zueinander verschiebbar ausgestaltet sind, sodass insbesondere ein teleskopierbares Rotorblatt gebildet ist, und durch die Rotorblattabschnitte beim Verschieben eine Minimalstellung, eine Zwischenstellung oder eine Maximalstellung ausbildbar ist, und einen Turm, insbesondere Windenergieanlagenturm, mit einem ersten Turmabschnitt und einem zweiten Turmabschnitt, wobei der erste Turmabschnitt und der zweite Turmabschnitt mittels einer Stelleinrichtung zueinander verschiebbar ausgestaltet sind, sodass insbesondere ein teleskopierbarer Turm gebildet ist, und durch die Turmabschnitte beim Verschieben eine Minimalstellung, eine Zwischenstellung oder eine Maximalstellung ausbildbar ist, sowie eine Windenergieanlage und ein Windenergieanlagenpark.

Windenergieanlagen mit Nabenhöhen von 100m sind im Offshorebereich derzeit der Stand der Technik. Um eine höhere Energieausbeute zu erhalten, müsste die Rotorfläche vergrößert und/oder die Nabenhöhe erhöht werden. Das Ändern der Nabenhöhe ist insbesondere deshalb von Vorteil, da der die Rotorblätter angreifende Wind homogener (laminar) verteilt ist.

Das derzeitige Limit in der Nabenhöhe bei heutigen Windenergieanlagen, ist im Wesentlichen durch die Krantechnik und somit der Kranlänge bestimmt.

Zudem sind aus dem Stand der Technik Rotorblätter mit veränderbarer Rotorblattlänge bekannt. Bei diesen Rotorblättern wird im Allgemeinen von teleskopierbaren Rotorblättern gesprochen. Insbesondere kann durch die veränderbare Länge der Rotorblätter die Energieausbeute steuernd und/oder regelnd angepasst werden.

Die US 2003/223868 A1 offenbart ein ausfahrbares Rotorblatt für eine Windturbine mit zwei Rotorblattabschnitten sowie einer Stelleinrichtung, wobei die beiden Rotorblattabschnitte zueinander verschiebbar ausgestaltet sind.

Die WO 2008/142498 A1 beschreibt einen Rotor mit variablem Durchmesser, bei dem die Länge jedes Rotorblatts mit einem ortsfesten Blattteil und einem beweglichen Blattteil über ein Druckspindelmechanismus in der Länge verstellt werden kann.

Die DE 4428731 A1 offenbart ein längenvariables Rotorblatt für eine Windkraftanlage, wobei das Rotorblatt als Teleskop mit einem starren Teleskopteil und einem beweglichen Teleskopteil ausgeführt ist.

Die US 2007/0243063 A1 offenbart einen ausfahrbaren Turm für eine Windturbine mit einem unbeweglichen zentralen Turmabschnitt und einem zweiten röhrenförmigen, beweglichen Turmabschnitt sowie ein Verriegelungsaggregat.

Die DE 736 454 C betrifft ein Windkraftwerk, welches von einem zweiteilig ausgebildetem Mastgerüst getragen wird, dessen Oberteil gegenüber dem Unterteil beweglich angeordnet ist.

Die DE 20 2006 011099 O1 offenbart einen Teleskopmast, der aus einer Mehrzahl von ineinander gesteckten Rohren mit nach oben abnehmendem Durchmesser besteht, welche zum Aufstellen des Teleskopmastes gegeneinander ausziehbar sind.

Die Entwicklung von Windenergieanlagen der letzten Jahrzehnte hat gezeigt, dass ein höherer Windertrag oder Energieertrag mit größeren Nabenhöhen und/oder Rotorblattdurchmessern einhergeht. Dies hatte zur Folge, dass Windenergieanlagen jeweils für die höheren Nabenhöhen oder größeren Rotorblattdurchmesser dimensioniert werden mussten. Daraus resultieren höhere Losten und größere Aufwände in Bezug auf Materialien, wie Fundamente oder Stützelemente. Es galt bisher die Regel, "höherer Ertrag gleich proportionale oder überproportionale Dimensionierung der Anlage in Bezug auf zu erwartende (Extrem-)Lasten".

Um eine Windenergieanlage zertifiziert zu bekommen, muss diese Extremlasten, wie beispielsweise ein sogenanntes 50-Jahres-Wind-Ereignis, überstehen können. Dies hat zur Folge, dass Windenergieanlagen mit teleskopierbaren Rotorblättern und Festlängenrotorblättern sicherheitstechnisch so ausgelegt sein müssen, dass mit voller Rotorblattlänge ein 50-Jahres-Wind keine Schäden an der Windenergieanlage verursacht. Dies bedeutet, einen enormen Material- und Sicherheitsaufwand, welche die Kosten für eine derartige Windenergieanlage erhöhen.

Aufgabe der Erfindung ist es, den Stand der Technik zu verbessern.

Gelöst wird die Aufgabe durch ein Rotorblatt mit einem ersten Rotorblattabschnitt und einem zweiten Rotorblattabschnitt, wobei der erste Rotorblattabschnitt und der zweite Rotorblattabschnitt mittels einer Stelleinrichtung zueinander verschiebbar ausgestaltet sind, sodass insbesondere ein teleskopierbares Rotorblatt gebildet ist, und durch die Rotorblattabschnitte beim Verschieben eine Minimalstellung, eine Zwischenstellung oder eine Maximalstellung ausbildbar ist, wobei das Rotorblatt eine Rückstelleinrichtung, welche derart eingerichtet ist, dass bei einer Funktionseinschränkung der Stelleinrichtung die Rotorblattabschnitte die Minimalstellung einnehmen.

Somit kann ein Rotorblatt bereitgestellt werden, bei dem gewährleistet werden kann, dass das Rotorblatt notfalls immer in der Minimalstellung verharrt oder in diese verbracht wird. Somit können die Sicherheitsanforderungen statt auf die Maximallänge, auf die Minimallänge angepasst werden.

Die bisher bestehende Regel "höherer Ertrag gleich proportionale oder überproportionale Dimensionierung der Anlage in Bezug auf zu erwartende (Extrem-)Lasten" kann dadurch durchbrochen werden und es gilt "Entkopplung des Ertrags von der Dimensionierung der Anlage in Bezug auf zu erwartende (Extrem-)Lasten". Damit können bestimmte Windenergieanlagen erst wirtschaftlich hergestellt werden.

Folgendes Begriffliche sei erläutert:
Ein "Rotorblattabschnitt" ist ein (Bestand-)Teil des Rotorblattes. Die Rotorblattabschnitte sind zu einander "verschiebbar" angeordnet, sodass ein teleskopierbares Rotorblatt vorliegt, bei welchem die Angriffsfläche des Windes einstellbar verändert werden kann. Insbesondere ist ein Rotorblattabschnitt teilweise in den anderen Rotorblattabschnitt versenkbar, sodass eine ausreichend stabile Verbindung bereitgestellt werden kann.

Das Verschieben der Rotorblattabschnitte zueinander, erfolgt mittels einer "Stelleinrichtung". Diese Stelleinrichtung prägt einem der Rotorblattabschnitte eine Rotations- oder Translationsverschiebung auf. In einer einfachen Ausgestaltung erfolgt dies mittels eines Zahnrades, welches in eine Zahnstange eingreift. Auch kann die Stelleinrichtung durch einen Rollenantrieb realisiert werden, wie er beispielsweise bei einem Fahrstuhl verwendet wird. Aber auch Techniken wie sie bei einem Magnetschwebeverfahren verwendet werden, können eingesetzt werden.

Bei dem Verschieben der Rotorblattabschnitte können im Wesentlichen drei Zustände oder entsprechend drei Stellungen der Rotorblattabschnitte zueinander eingestellt werden.

In einer "Minimalstellung" nimmt das Rotorblatt seine Minimallänge ein. Eine weitere Reduktion der Rotorblattlänge ist nicht realisierbar.

In der "Maximalstellung" weist das Rotorblatt seine Maximallänge auf. Ein weiteres Verschieben zum Verlängern des Rotorblattes kann zerstörungsfrei nicht erfolgen..

Vorliegend umfasst "Zwischenstellung" sämtliche Positionen zwischen der Minimalstellung und der Maximalstellung.

Mit dem Begriff der "Funktionseinschränkung der Stelleinrichtung" sind sämtliche Defekte und Einschränkungen der Stelleinrichtung umfasst. Dies kann sowohl den Totalausfall der Stelleinrichtung, als auch lediglich eine reduzierte Leistung eines (Stell-)Motors umfassen.

Die "Rückstelleinrichtung" bildet zwischen den einzelnen Rotorblatteinstellungen eine Kraft aus, welche technisch gewährleistet, dass die Rotorblattabschnitte in die Minimalstellung verfahren werden. In einer Ausgestaltung ist dies eine Zugfeder, welche an beiden Rotorblattabschnitten mit den jeweiligen Federenden befestigt ist. Aber auch andere Alternativen, wie beispielsweise einander zugeordnete Elektromagnete können die Rückstelleinrichtung bilden.

In einer weiteren Ausführungsform weist die Rückstelleinrichtung ein Federelement mit einer Federkraft auf.

Durch diese mechanische Rückstelleinrichtung kann unabhängig von einer etwaigen Stromversorgung das Einnehmen einer Minimalstellung garantiert werden.

Um zu gewährleisten, dass die Rückstelleinrichtung unabhängig von der Rotationsgeschwindigkeit der Rotorblätter das Rotorblatt gesichert in die Minimalstellung verfahren, kann die Federkraft größer als eine (maximale) Zentrifugalkraft eines äußeren Rotorblattabschnittes und/oder einer Stelleinrichtungskraft sein.

In einer weiteren Ausführungsform umfasst die Stelleinrichtung eine Sicherungseinrichtung.

Somit können die Rotorblattabschnitte sowohl in der Minimalstellung, als auch in der Zwischenstellung, als auch in der Maximalstellung zueinander fixiert werden.

Die "Arretierungseinrichtung" kann sowohl elektrische als auch mechanische Arretierungselemente aufweisen. Ein elektrisches Arretierungselement umfasst dabei einen ansteuerbaren Elektromagneten und ein mechanisches Arretierungselement, beispielsweise einen Bolzen, welcher in eine Bolzenöffnung verschoben werden kann. Besonderes Vorteilhaft ist, dass die Arretierungselemente selbst ebenfalls ausfallsicher gesteuert werden können, sodass beispielsweise bei einem Stromausfall die Arretierung automatisch gelöst wird. Diese kann vorliegend wiederum mittels einer Rückstelleinrichtung, die der Arretierungseinrichtung zugeordnet ist, realisiert werden.

Um zu gewährleisten, dass die Rückstelleinrichtung das Rotorblatt in eine Minimalstellung verfährt, kann die Stelleinrichtung eine Sicherungseinrichtung aufweisen, welche in einem Sicherungsfall einen Rotorblattabschnitt oder mehrere Rotorblattabschnitte frei gibt.

Unter "freigeben" wird insbesondere verstanden, dass die Rückstelleinrichtung die Rotorblattabschnitte derart bewegen kann, dass die Rotorblattabschnitte die Minimalstellung einnehmen. In einer einfachen Ausgestaltung werden die Arretiereinrichtungen gelöst oder es wird ein Motor, welcher das Zahnrad antreibt, in einen Freilauf geschaltet oder mechanisch - beispielsweise auf Grund von Magneten - weggeklappt, sodass der Motor keine Kraft gegen die Rückstelleinrichtung aufbringt.

In einer weiteren Ausführungsform weist das Rotorblatt weitere Rotorblattabschnitte und/oder weitere Stelleinrichtungen und/oder weitere Rückstelleinrichtungen auf.

Somit kann beispielsweise ein mehrfach verlängerbares Rotorblatt mit jeweils separaten Stelleinrichtungen und Rückstelleinrichtungen bereitgestellt werden.

In einem weiteren Aspekt der Erfindung wird die Aufgabe gelöst durch einen Turm, insbesondere Windenergieanlagenturm, mit einem ersten Turmabschnitt und einem zweiten Turmabschnitt, wobei der erste Turmabschnitt und der zweite Turmabschnitt mittels einer Stelleinrichtung zueinander verschiebbar ausgestaltet sind, sodass insbesondere ein teleskopierbarer Turm gebildet ist, und durch die Turmabschnitte beim Verschieben eine Minimalstellung, eine Zwischenstellung oder eine Maximalstellung ausbildbar ist, wobei eine Rückstelleinrichtung, welche derart eingerichtet ist, dass bei einer Funktionseinschränkung der Stelleinrichtung die Turmabschnitte die Minimalstellung einnehmen.

Somit kann ein Turm bereitgestellt werden, der auch bei einem Extremereignis, wie beispielsweise einem 50-Jahres-Wind-Ereignis, gesichert in eine Minimalposition verfahren werden kann. Durch das Einnehmen dieser Minimalposition kann die Energieaufnahme einer Windenergieanlage reduziert werden.

Auch hier gilt, dass die bisher bestehende Regel "höherer Ertrag gleich proportionale oder überproportionale Dimensionierung der Anlage in Bezug auf zu erwartende (Extrem-)Lasten" dadurch durchbrochen werden kann und es gilt "Entkopplung des Ertrags von der Dimensionierung der Anlage in Bezug auf zu erwartende (Extrem-)Lasten". Damit können ebenfalls bestimmte Windenergieanlagen erst wirtschaftlich hergestellt werden.

Zudem kann mit dem Turm insbesondere im Offshorebereich eine Windenergieanlage bereitgestellt werden, welche die Nabenhöhe wesentlich erhöht, so sind nach dem Stand der Technik derzeitig Nabenhöhen auf eine Höhe von ca. 100m beschränkt. Durch die hier vorliegende Technologie kann jedoch eine effektive Nabenhöhe von beispielsweise 300m realisiert werden. Ergo können mit derzeitigen Aufbautechnologien wesentlich leistungsfähigere (Offshore-) Windenergieanlagen bereitgestellt werden.

Bezüglich der Definitionen wird auf die vorherigen Definitionen verwiesen, welche angepasst auf den Turm hier Geltung entfalten.

Vorliegend ist jedoch zu beachten, dass die Rückstelleinrichtung insbesondere die Gravitation ausnutzt, sodass beispielsweise Federelemente, welche die einzelnen Turmabschnitte zusammenziehen würden entfallen können.

In einer diesbezüglichen Ausführungsform kann der Turm eine Bremseinrichtung aufweisen, welche einen Turmabschnitt auf einem Weg in die Minimalstellung abbremst und/oder abfedert. Dadurch kann verhindert werden, dass ein oberer Turmabschnitt ungebremst in einen unteren Turmabschnitt verfährt.

Die "Bremseinrichtung" kann beispielsweise als Gasdruckfeder öder als Öldruckfeder mit Endlagendämpfung ausgebildet sein.

Um sowohl den Energieaufwand zum gegenseitigen Verfahren der Turmabschnitte zu reduzieren als auch eine Bremswirkung zu realisieren, kann die Bremseinrichtung ein Kontergewicht oder ein Dämpfungselement aufweisen.

Um die Turmabschnitte in Bezug zu einander zu fixieren, kann die Stelleinrichtung eine Arretiereinrichtung aufweisen.

Bezüglich der Arretierungseinrichtung sei auf die vorherigen Ausführungen verwiesen, welche analog angepasst auf den Turm gelten.

Um vorliegend zu garantieren, dass die Turmabschnitte zu jeder Zeit in die Minimalstellung verfahren können, kann die Stelleinrichtung eine Sicherungseinrichtung aufweisen, welche in einem Sicherungsfall einen Turmabschnitt oder mehrere Turmabschnitte frei gibt.

Auch hier sei auf die zuvor dargelegten Definitionen der Sicherungseinrichtung verwiesen, welche vorliegend angepasst auf den Turm weiterhin gelten.

In einer weiteren Ausführungsform weist der Turm weitere Turmabschnitte, und/oder weitere Stelleinrichtungen, und/öder weitere Rückstelleinrichtungen auf.

Somit kann ein Windenergieanlagenturm bereitgestellt werden, welcher um mehr als das Doppelte seiner Grundlänge verlängerbar ist und bei dem garantiert werden kann, dass in einem Notfall die jeweiligen Minimalstellungen eingenommen werden.

In einem weiteren Aspekt wird die Aufgabe gelöst durch eine Windenergieanlage, insbesondere Offshore-Windenergieanlage, welche einen zuvor beschriebene Turm und/oder ein zuvor beschriebenes Rotorblatt aufweist.

Somit kann insbesondere im Offshorebereich eine Windenergieanlage bereitgestellt werden, deren Nabenhöhe weit oberhalb von 100m liegt und welche einstellbar eine entsprechende Energieernte aus dem anliegenden Wind aufnehmen kann. Zudem kann die Windenergieanlage mittels der Höhenfeststellung des Turmes oder der Längenverschiebung der Rotorblätter die Energieaufnahme des Generators gesteuert und/oder geregelt werden.

In einem weiteren Aspekt der Erfindung kann die Aufgabe gelöst werden durch einen Windenergieanlagenpark, insbesondere Offshore-Windenergieanlagenpark, welcher eine zuvor beschriebene Windenergieanlage aufweist.

Insbesondere können somit Windenergieanalgenparkeffekte minimiert werden. Beispielsweise können in Windrichtung hintereinanderstehende Windenergieanlagen so verfahren werden, dass die erste im Wind stehende Windenergieanlage auf einer Minimalhöhe und eine dahinter stehende Windenergieanalage auf Maximalhöhe betrieben wird, wodurch etwaige Turbulenzen, welche den Wind durch die erste Windenergieanlage aufgeprägt werden, keine oder nur geringe Auswirkungen auf die dahinterliegende Windenergieanalge ausüben kann.

Dennoch kann bei beiden Windenergieanalagen im Wesentlichen der gleiche Energieertrag erwirtschaftet werden, da beispielsweise die erste im Wind stehende Windenergieanlage mit Rotorblätter in Maximalstellung und die dahinter stehende Windenergieanlage die Rotorblätter in Minimalstellung betrieben werden.

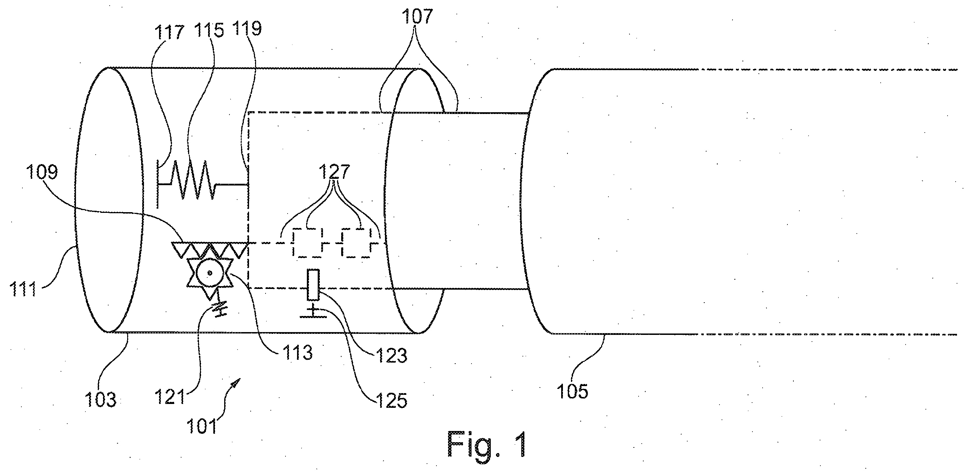

Im Weiteren wird die Erfindung anhand von Ausführungsbeispielen erläutert. Es zeigen
- Figur 1: eine stark schematische Darstellung eines Ausschnitts eines teleskopierbaren Rotorblatts,

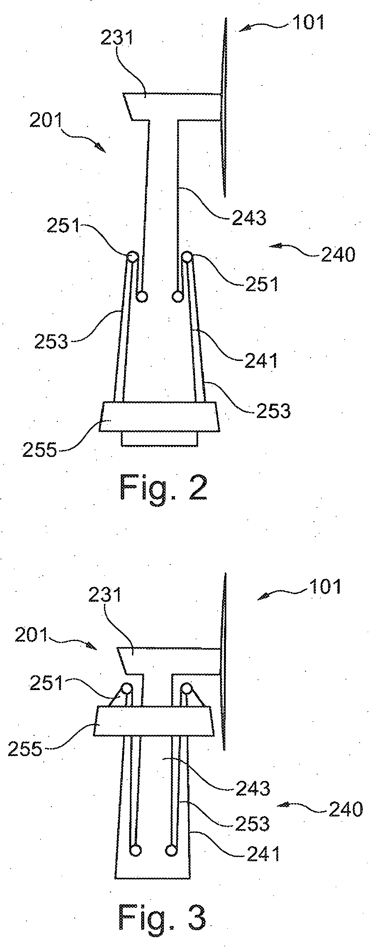

- Figur 2: eine stark schematische Seitendarstellung einer Windenergieanlage mit einer Nabenhöhe von 190m und
- Figur 3: eine stark schematische Seitenansicht einer Windenergieanlage mit einer Nabenhöhe von 100m.

Ein teleskopierbares Rotorblatt 101 weist einen ersten Rotorblattabschnitt 103 und einen zweiten Rotorblattabschnitt 105 auf. Der erste Rotorblattabschnitt 103 ist an einer Nabe (nicht dargestellt) einer Windenergieanlage mittels Rotorblattflansch 111 anflanschbar. Der zweite Rotorblattabschnitt 105 weist einen Zapfen 107 auf, welcher im ersten Rotorblattabschnitt 103 geführt ist.

Eine Feder 115 weist eine erste Federverbindung 117, welche mit dem ersten Rotorblattabschnitt 103 verbunden ist, und eine zweite Federverbindung 119, welche mit dem Zapfen 107 und somit mit dem zweiten Rotorblattabschnitt 105 verbunden ist, auf. Zudem ist an dem Zapfen 107 eine Zahnstange 109 angebracht. In die Zahnstange 109 greift ein Zahnrad 113 ein.

Das Zahnrad 113 ist fest mit dem ersten Rotorblattabschnitt 103 über eine Zahnradfeder 121 verbunden. Zudem ist an der Drehachse (nicht dargestellt) des Zahnrades 113 ein Stellmotor (nicht dargestellt) angeordnet.

Weiterhin weist der Zapfen 107 mehrere nebeneinander angeordnete Elektromagnete 127 auf. Diesen Elektromagneten ist ein permanentmagnetischer Bolzen 123 zugeordnet, welcher über eine Bolzenfeder 125 fest mit dem ersten Rotorblattabschnitt 103 verbunden ist.

Allgemein wird über den Stellmotor und dem Zahnrad 113 und der zugeordneten Zahnstange 109 gegen die Federkraft der Rotorblattfeder 115 der zweite Rotorblattabschnitt 115 in eine Betriebsstellung verfahren.

Zum Verfahren des zweiten Rotorblattabschnitts 105 in die Minimalstellung des teleskopierbaren Rotorblatts 101 wird der Zapfen 107 vollständig vom ersten Rotorblattabschnitt 103 aufgenommen.

Das garantierte Einnehmen der Minimalstellung kann kumulativ oder alternativ wie folgt erreicht werden:

Der mit dem Zahnrad verbundene Stellmotor (nicht dargestellt) wird in eine Leerlaufstellung geschaltet. Dadurch zieht die Rotorblattfeder 115 den zweiten Rotorblattabschnitt 105 und somit den Zapfen 107 vollständig in den ersten Rotorblattabschnitt 103.

Zudem kann das Zahnrad 113 über die Feder 121 durch das Abschalten eines Elektromagnetes unter der Wirkung der Zahnradfeder 121 "weggeklappt" werden, sodass das Zahnrad 113 keinen Wirkkontakt mit der Zahnstange 109 ausbildet. Auch in diesem Fall zieht die Rotorblattfeder 115 den zweiten Rotorblattabschnitt 105 samt Zapfen 107 vollständig in den ersten Rotorblattabschnitt 103 hinein.

Mittels des Bolzens 123 kann der Zapfen 107 mit dem ersten Rotorblattabschnitt 103 fixiert werden. Dazu wird einer der Elektromagnete 127 derart beschaltet, dass der Bolzen 123 in eine Arretieraufnahme (nicht dargetstellt) hineingezogen wird.

Für den Fall, dass das teleskopierbare Rotorblatt 101 in die Minimalstellung verfahren werden soll, wird die Stromversorgung der Elektromagnete unterbrochen und die Bolzenfeder 125 zieht den Bolzen 123 aus der Arretieraufnahme heraus, sodass der zweite Rotorblattabschnitt 105 mit zugehörigem Zapfen 107 frei ist und der zweite Rotorblattabschnitt 105 von der Rotorblattfeder 115 in den ersten Rotorblattabschnitt 103 vollständig ausgenommen wird.

Die Funktionsweise eines teleskopierbaren Turms, wird anhand einer Windenergieanlage 201 näher erläutert.

Eine Windenergieanlage 201 weist einen teleskopierbaren Turm 240 mit oben angeordnetem Maschinenhaus 230 und über eine Nabe angeflanschte Rotorblätter 101 auf.

Der teleskopierbare Turm 240 umfasst einen unteren Turmabschnitt 241 und einen zugeordneten oberen Turmabschnitt 243, wobei der obere Turmabschnitt 243 wenigstens teilweise in den unteren Turmabschnitt 241 versenkbar ist. Der untere Turmabschnitt 241 und der obere Turmabschnitt 243 sind über einen Turmantrieb 251, welcher wie ein Aufzugsantrieb ausgestaltet ist, zueinander verschiebbar. Dabei ist zusätzlich über ein Halteseil 253 ein Gegengewicht 255 angeordnet.

Das Gegengewicht 255 hat eine etwas geringere Masse als der obere Turmabschnitt 243 inklusive Maschinenhaus 231 und teleskopierbare Rotorblätter 101, sodass ein langsames Verfahren des oberen Turmabschnitts 243 mit zugehörigen Aufbauten realisierbar ist.

Um die Energieausbeute zu optimieren, wird im Regelfall die Windenergieanlage mit ausgefahrenen oberen Turmabschnitt 243 betrieben. Eine wesentliche Regelung erfolgt über die teleskopierbaren Rotorblätter 101.

Für den Fall, dass die Windenergieanlage in eine Minimalstellung verfahren werden muss, wird der Turmantrieb 251 in einem Leerlauf versetzt. In diesem Fall hebt sich das Gegengewicht 255 an und somit versenkt sich der obere Turmabschnitt 243 in den unteren Turmabschnitt 241. Analog können die Sicherheitsmechanismen des teleskopierbaren Rotorblatts auch vorliegend für die beiden Turmabschnitte 243,241 verwendet werden.

### Bezugszeichenliste:

- 101: teleskopierbares Rotorblatt
- 103: erster Rotorblattabschnitt
- 105: zweiter Rotorblattabschnitt
- 107: Zapfen
- 109: Zahnstange
- 111: Rotorblattflansch
- 113: Zahnrad
- 115: Rotorblattfeder
- 117: erste Federverbindung
- 119: zweite Federverbindung
- 121: Zahnradfeder
- 123: Bolzen
- 125: Feder
- 127: Elektromagnet
- 201: Windenergieanlage
- 231: Maschinenhaus
- 240: Turm
- 241: Unterer Turmabschnitt
- 243: oberer Turmabschnitt
- 251: Turmantrieb
- 253: Halteseil
- 250: Gegengewicht

## Patentansprüche

1. Rotorblatt (101) mit einem ersten Rotorblattabschnitt (103) und einem zweiten Rotorblattabschnitt (105), wobei der erste Rotorblattabschnitt und der zweite Rotorblattabschnitt mittels einer Stelleinrichtung (109,113) zueinander verschiebbar ausgestaltet sind und durch die Rotorblattabschnitte beim Verschieben eine Minimalstellung, eine Zwischenstellung oder eine Maximalstellung ausbildbar ist, **gekennzeichnet durch** eine Rückstelleinrichtung (115), welche derart eingerichtet ist, dass bei einer Funktionseinschränkung der Stelleinrichtung die Rotorblattabschnitte die Minimalstellung einnehmen.

2. Rotorblatt nach Anspruch 1, **dadurch gekennzeichnet, dass** die Rückstelleinrichtung ein Federelement mit einer Federkraft aufweist.

3. Rotorblatt nach Anspruch 2, **dadurch gekennzeichnet, dass** die Federkraft größer als eine Zentrifugalkraft eines äußeren Rotorblattabschnitts und/oder einer Stelleinrichtungskraft ist.

4. Rotorblatt nach einem der vorherigen Ansprüche, **dadurch gekennzeichnet, dass** die Stelleinrichtung eine Arretiereinrichtung (123) umfasst.

5. Rotorblatt nach einem der vorherigen Ansprüche, **dadurch gekennzeichnet, dass** die Stelleinrichtung eine Sicherungseinrichtung (123, 125, 127) aufweist, welche in einem Sicherungsfall einen Rotorblattabschnitt oder mehrere Rotorblattabschnitte frei gibt.

6. Rotorblatt nach einem der vorherigen Ansprüche, **gekennzeichnet durch** weitere Rotorblattabschnitte und/oder weitere Stelleinrichtungen und/oder weitere Rückstelleinrichtungen.

7. Turm (240), insbesondere Windenergieanlagenturm, mit einem ersten Turmabschnitt (241) und einem zweiten Turmabschnitt (243), wobei der erste Turmabschnitt und der zweite Turmabschnitt mittels einer Stelleinrichtung (251) zueinander verschiebbar ausgestaltet sind und durch die Turmabschnitte beim Verschieben eine Minimalstellung, eine Zwischenstellung oder eine Maximalstellung ausbildbar ist, **gekennzeichnet durch** eine Rückstelleinrichtung, welche derart eingerichtet ist, dass bei einer Funktionseinschränkung der Stelleinrichtung die Turmabschnitte die Minimalstellung einnehmen.

8. Turm nach Anspruch 7, **gekennzeichnet durch** eine Bremseinrichtung, welche einen Turmabschnitt auf einem Weg in die Minimalstellung abbremst und/oder abfedert.

9. Turm nach einem der Ansprüche 7 oder 8, **dadurch gekennzeichnet, dass** die Bremseinrichtung ein Kontergewicht (255) und/oder ein Dämpfungselement aufweist.

10. Turm nach einem der Ansprüche 7 bis 9, **dadurch gekennzeichnet, dass** die Stelleinrichtung eine Arretiereinrichtung umfasst.

11. Turm nach einem der Ansprüche 7 bis 10, **dadurch gekennzeichnet, dass** die Stelleinrichtung eine Sicherungseinrichtung aufweist, welche in einem Sicherungsfall einen Turmabschnitt oder mehrere Turmabschnitte frei gibt.

12. Turm nach einem der Ansprüche 7 bis 11, **gekennzeichnet durch** weitere Turmabschnitte und/oder weitere Stelleinrichtungen und/oder weitere Rückstelleinrichtungen.

13. Windenergieanlage (201), insbesondere Offshore-Windenergieanlage, welche einen Turm nach einem der Ansprüche 7 bis 12 und/oder ein Rotorblatt nach einem der Ansprüche 1 bis 6 aufweist.

14. Windenergieanlagenpark, insbesondere Offshore-Windenergieanlagenpark, welcher eine Windenergieanlage nach Anspruch 13 aufweist.

## Claims

1. A rotor blade (101) with a first rotor blade section (103) and a second rotor blade section (105), wherein the first rotor blade section and the second rotor blade section are designed to be displaceable relative to each other by means of a control device (109, 113) and the rotor blade sections can adopt a minimum position, an intermediate position or a maximum position when displaced, **characterized by** a reset device (115), which is setup in such a manner that in case of a functional limitation of the control device, the rotor blade sections take up the minimum position.

2. The rotor blade according to claim 1, **characterized in that** the reset device has a spring element with a spring force.

3. The rotor blade according to claim 2, **characterized in that** the spring force is greater than a centrifugal force of an outer rotor blade section and/or the force of the control device.

4. The rotor blade according to one of the afore-mentioned claims, **characterized in that** the control device comprises a locking device (123).

5. The rotor blade according to one of the afore-mentioned claims, **characterized in that** the control device has a safety device (123, 125, 127), which releases a rotor blade section or several rotor blade sections in case they need to be secured.

6. The rotor blade according to one of the afore-mentioned claims, **characterized by** other rotor blade sections and/or other control devices and/or other reset devices.

7. A tower (240), more specifically a wind turbine tower with a first tower section (241) and a second tower section (243), wherein the first tower section and the second tower section are designed to be movable relative to each other by means of a control device (251) and the tower sections can adopt a minimum position, an intermediate position or a maximum position when displaced, **characterized by** a reset device, which is configured in such a manner that in case of a functional limitation of the control device, the tower sections take up the minimum position.

8. The tower according to claim 7, **characterized by** a braking device, which slows down and/or cushions a tower section on its way to the minimum position.

9. The tower according to one of the claim 7 or 8, **characterized in that** the braking device has a counterweight (255) and/or a damping element.

10. The tower according to one of the claims 7 to 9, **characterized in that** the control device has a locking device.

11. The tower according to one of the claims 7 to 10, **characterized in that** the control device has a safety device, which releases a tower section or several tower sections in case they need to be secured.

12. The tower according to one of the claims 7 to 11, **characterized by** other tower sections and/or other control devices and/or other reset devices.

13. A wind turbine (201), more specifically an offshore wind turbine having a tower according to one of the claims 7 to 12 and/or a rotor blade according to one of the claims 1 to 6.

14. A wind farm, more specifically an offshore wind farm having a wind turbine according to claim 13.

## Revendications

1. Pale de rotor (101) avec un premier segment de pale de rotor (103) et un second segment de pale de rotor (105), où le premier segment de pale de rotor et le second segment de pale de rotor sont conçus de manière à être déplaçables l'une par rapport l'autre au moyen d'un dispositif de réglage (109, 113) et où les segments de pales de rotor sont aptes à former une position minimale, une position intermédiaire ou une position maximale lors de leur déplacement, **caractérisée par** un dispositif de rappel (115) conçu pour que lors d'une restriction du fonctionnement du dispositif de réglage, les segments de pale de rotor adoptent la position minimale.

2. Pale de rotor selon la revendication 1, **caractérisée en ce que** le dispositif de rappel comporte un élément de ressort avec une force de ressort.

3. Pale de rotor selon la revendication 2, **caractérisé en ce que** la force de ressort est plus grande qu'une force centrifuge d'un segment de pale de rotor extérieur et/ou d'une force du dispositif de réglage.

4. Pale de rotor selon l'une quelconque des revendications précédentes, **caractérisé en ce que** le dispositif de réglage comporte un dispositif de blocage (123).

5. Pale de rotor selon l'une quelconque des revendications précédentes, **caractérisée en ce que** le dispositif de réglage comporte un dispositif de sécurité (123, 125, 127) qui débloque un segment de pale de rotor ou plusieurs segments de pale de rotor lors d'une situation de sécurisation.

6. Pale de rotor selon l'une quelconque des revendications précédentes, **caractérisée par** d'autres segments de pale de rotor et/ou d'autres dispositifs de réglage et/ou d'autres dispositifs de rappel.

7. Mât (240), en particulier mât d'éolienne, avec un premier segment de mât (241) et un second segment de mât (243), où le premier segment de mât et le second segment de mât sont conçus de manière à être déplaçables l'un par rapport l'autre au moyen d'un dispositif de réglage (251) et où les segments de mât sont aptes à former une position minimale, une position intermédiaire ou une position maximale lors de leur déplacement, **caractérisé par** un dispositif de rappel conçu pour que lors d'une restriction du fonctionnement du dispositif de réglage, les segments de mât adoptent la position minimale.

8. Mât selon la revendication 7, **caractérisé par** un dispositif de freinage qui freine et/ou amortit un segment de mât lors d'un déplacement vers la position minimale.

9. Mât selon l'une des revendications 7 ou 8, **caractérisé en ce que** le dispositif de freinage comporte un contrepoids (255) et/ou un élément d'amortissement.

10. Mât selon l'une des revendications 7 à 9, **caractérisé en ce que** le dispositif de réglage comporte un dispositif de blocage.

11. Mât selon l'une des revendications 7 à 10, **caractérisé en ce que** le dispositif de réglage comporte un dispositif de sécurité qui débloque un segment de mât ou plusieurs segments de mât lors d'une situation de sécurisation.

12. Mât selon l'une des revendications 7 à 11, **caractérisé par** d'autres segments de mât et/ou d'autres dispositifs de réglage et/ou d'autres dispositifs de rappel.

13. Eolienne (201), en particulier éolienne offshore comportant un mât selon l'une des revendications 7 à 12 et/ou une pale de rotor selon l'une des revendications 1 à 6.

14. Parc d'éoliennes, en particulier parc d'éoliennes offshore comportant une éolienne selon la revendication 13.
